# EUROPEAN PATENT APPLICATION

(11) **EP 2 491 914 A2**
(43) Date of publication of application: **29.08.2012**
(21) Application number: 10825125.7
(22) Date of filing: 30.09.2010
(51) Int. Cl.: A61J 9/00, A47J 31/40

(54) **AUTOMATIC BABY FORMULA MIXING APPARATUS**

(30) Priority: 20.10.2009 KR 20090099514
(71) Applicant: Edam Tech Co., Ltd., Busan 617-835 (KR)
(72) Inventor: DO, Hyeong-jin, Busan 617-835 (KR); KANG, Dong-gwon, Busan 617-835 (KR)
(74) Representative: Ganahl, Bernhard
(86) International application number: PCT/KR2010/006655
(87) International publication number: WO 2011/049300

(57) **Abstract**

Disclosed herein is an automatic baby formula mixing apparatus. A formula-dispensing unit is configured such that when a transfer tip is extracted from a formula container by a transferring means, powdered formula falls into a feeding bottle. A water-supplying unit includes a water reservoir and a hot water tank provided with a heating means. A sensor unit includes a temperature sensor and a flow sensor. A pump unit pumps water from either the water reservoir or the hot water tank into the other. A control unit controls the number of times of extraction of the transfer tip depending on a preset amount of powdered formula, controls the heating means, and controls the pump unit such that a preset amount of water is supplied from the hot water tank into the feeding bottle and then a predetermined amount of water is reversely pumped from the hot water tank into the water reservoir.

## Description

### Technical Field

The present invention relates, in general, to baby formula mixing apparatuses and, more particularly, to a baby formula mixing apparatus which supplies powdered formula of a preset amount and water of a preset amount and temperature and automatically mixes the powdered formula and the water with each other.

### Background Art

Lack of breast milk or shortage of time for breast-feeding, for example, because of jobs, makes it difficult to breast-feed. For this reason, it is necessary to feed baby formula to babies. When making baby formula, one needs not only to mix powdered formula with water at an appropriate ratio, but also to adjust the temperature of the water so that it is neither too cold nor too hot for a baby.

However, when mixing powdered formula with water, it is not easy to precisely adjust the temperature and amount of water. Moreover, because making baby formula should be carried out while taking care of a baby, it makes the work of making baby formula more difficult.

In an effort to overcome the above problems, a variety of baby formula supply apparatuses have been proposed. The constructions of such conventional baby formula supply apparatuses are similar to those of typical automatic coffee vending machines.

That is, a predetermined amount of powdered formula is supplied from one side after having been weighed, while hot water is supplied from another side. The supplied powdered formula and hot water enter a feeding bottle that is disposed in a lower portion of the apparatus.

However, in the case of the conventional baby formula supply apparatuses, a tube for supplying powdered formula is disposed adjacent to a tube for supplying hot water. After powdered formula has been supplied, hot water is supplied downwards while some powdered formula still remains on the formula supply tube. Thus, steam, generated from the feeding bottle or hot water that is being supplied downwards from the hot water supply tube, comes into contact with the formula supply tube, thus supplying water into the powdered formula.

To solve this conventional problem, an apparatus was proposed in Korean Patent Laid-open Publication No. 10-2009-0051432 (May 22, 2009), entitled "Baby formula supply apparatus", which was filed by the applicant of the present invention.

This baby formula supply apparatus somewhat improved the precision in the amount of powdered formula supplied into a feeding bottle. However, it is very difficult to supply a precise amount of water. Further, there is a problem in that even after the supply of water into the feeding bottle has been completed and the feeding bottle has been removed from the apparatus, water that remains in a water supply tube intermittently drips onto the bottom.

Moreover, a heating means heats the entirety of a water reservoir that stores water, resulting in high energy consumption.

### Disclosure

### Technical Problem

Accordingly, the present invention has been made keeping in mind the above problems occurring in the prior art, and an object of the present invention is to provide an automatic baby formula mixing apparatus which includes a hot water tank separated from a water reservoir so that only the hot water tank can be heated, thus reducing energy consumption, and which is configured such that water that remains in a tube after the supply of water has been completed can be returned into the hot water tank, thus preventing the water that remains in the tube from undesirably dripping.

### Technical Solution

In order to accomplish the above object, in an aspect, the present invention provides an automatic baby formula mixing apparatus for supplying powdered formula and water into a feeding bottle in response to setting of an amount of powdered formula and an amount and temperature of water by a user, the automatic baby formula mixing apparatus including: a formula-dispensing unit installed in a formula container containing powdered formula, the formula-dispensing unit having a transfer tip formed with a receiving hole that is open on upper and lower ends thereof, the receiving hole receiving a predetermined amount of powdered formula therein and transferring means for reciprocating the transfer tip between inside and outside of the formula container, whereby when the transfer tip is extracted out of the formula container, the powdered formula that has been in the receiving hole falls into the feeding bottle disposed therebelow; a water-supplying unit having a water reservoir disposed at a predetermined position around the formula-dispensing unit, the water reservoir storing water therein, and a hot water tank communicating with the water reservoir and receiving water supplied from the water reservoir, the hot water tank being provided with heating means for heating the water in the hot water tank, wherein an end of the hot water tank is disposed above the feeding bottle so that water of a preset amount and temperature is supplied from the hot water tank into the feeding bottle; a sensor unit comprising a temperature sensor measuring the temperature of the water stored in the hot water tank, and a flow sensor provided on an outlet of the hot water tank, the flow sensor measuring the amount of water discharged from the hot water tank; a pump unit disposed between the water reservoir and the hot water tank, the pump unit pumping water from either the water reservoir or the hot water tank into the other; and a control unit: controlling a number of times of extraction of the transfer tip depending on a preset amount of powdered formula and retracting the transfer tip into the formula container; controlling the heating means depending on a preset temperature of the water; operating the pump unit depending on a preset amount of water so that the preset amount of water is pumped from the water reservoir into the hot water tank, thus supplying the preset amount of water into the feeding bottle; and operating the pump unit in a reverse direction after the supply of water into the feeding bottle has been completed, thus reversely pumping a predetermined amount of water from the hot water tank into the water reservoir.

The sensor unit may further include a position sensor disposed above the transfer tip, the position sensor sensing a position of the transfer tip.

The heating means may include a heat wire installed in the hot water tank in a coil shape.

The pump unit may include a supply pump pumping water from the water reservoir into the hot water tank, and a return pump pumping water from the hot water tank into the water reservoir.

The automatic baby formula mixing apparatus may further include an ultraviolet lamp emitting ultraviolet rays to sterilize the formula-dispensing unit, the water-supplying unit, and the feeding bottle disposed therebelow.

In another aspect, the present invention provides an automatic baby formula mixing apparatus for supplying powdered formula and water into a feeding bottle in response to setting of an amount of powdered formula and an amount and temperature of water by a user, the automatic baby formula mixing apparatus including: a formula-dispensing unit having a formula container containing powdered formula therein, a screw provided under the formula container, the screw transferring powdered formula in one direction and discharging the powdered formula into the feeding bottle disposed therebelow, and a drive device driving the screw; a water-supplying unit having a water reservoir disposed at a predetermined position around the formula-dispensing unit, the water reservoir storing water therein, and a hot water tank communicating with the water reservoir and receiving water supplied from the water reservoir, the hot water tank being provided with heating means for heating the water in the hot water tank, wherein an end of the hot water tank is disposed above the feeding bottle so that water of a preset amount and temperature is supplied from the hot water tank into the feeding bottle; a sensor unit comprising a temperature sensor measuring the temperature of the water stored in the hot water tank, and a flow sensor provided on an outlet of the hot water tank, the flow sensor measuring the amount of water discharged from the hot water tank; a pump unit disposed between the water reservoir and the hot water tank, the pump unit pumping water from either the water reservoir or the hot water tank into the other; and a control unit: controlling a number of revolutions of the screw depending on a preset amount of powdered formula; controlling the heating means depending on a preset temperature of the water; operating the pump unit depending on the preset amount of water so that the preset amount of water is pumped from the water reservoir into the hot water tank, thus supplying the preset amount of water into the feeding bottle; and operating the pump unit in a reverse direction after the supply of water into the feeding bottle has been completed, thus reversely pumping a predetermined amount of water from the hot water tank into the water reservoir.

### Advantageous Effects

In an automatic baby formula mixing apparatus according to the present invention, a hot water tank is separately provided from a water reservoir so that only the hot water tank can be heated, thus reducing energy consumption. Furthermore, water that remains in a tube after the supply of water has been completed can be returned into the hot water tank. Thus, the water that remains in the tube can be prevented from undesirably dripping.

### Description of Drawings

Fig. 1 is a view showing the internal construction of an automatic baby formula mixing apparatus, according to a preferred embodiment of the present invention;
Fig. 2 is of views illustrating a formula-dispensing unit shown in Fig. 1 in detail;
Fig. 3 is a schematic view illustrating a concept of controlling the amount of water and the temperature of water according to the present invention;
Fig. 4 is a schematic view showing the construction of a formula-dispensing unit of an automatic baby formula mixing apparatus, according to another preferred embodiment of the present invention; and
Fig. 5 is a front view illustrating the external appearance of the apparatus of the present invention.

### <Description of the Reference Numerals in the Drawings>

- 100:: formula-dispensing unit
- 140:: transfer tip
- 120:: formula container
- 142:: receiving hole
- 160:: transferring means
- 180:: screw
- 200:: water-supplying unit
- 240:: hot water tank
- 260:: heating means
- 300:: sensor unit
- 340:: flow sensor
- 400:: pump unit
- 440:: return pump
- 500:: control unit
- 700:: receiving chamber
- 720:: switch
- 740:: set button
- b:: feeding bottle
- 162:: link
- 190:: drive device
- 220:: water reservoir
- 242:: tube

- 320:: temperature sensor
- 360:: position sensor
- 420:: supply pump

- 600:: ultraviolet lamp
- 710:: bottle support
- 730:: liquid crystal display

### Best Mode

Hereinafter, preferred embodiments of the present invention will be described in detail with reference to the attached drawings. The following description and attached drawings are for the overall understanding of the present invention, so the technical scope of the present invention is not limited thereto. Further, if detailed descriptions of well-known functions or configurations would unnecessarily obfuscate the gist of the present invention, the detailed descriptions thereof will be omitted.

The present invention includes a formula-dispensing unit 100 which supplies powdered formula, a water-supplying unit 200 which supplies water, a sensor unit 300 which senses the amount of water and the temperature of the water, a pump unit 400 which pumps water, and a control unit 500 which controls the formula-dispensing unit 100, the water-supplying unit 200, and the pump unit 400.

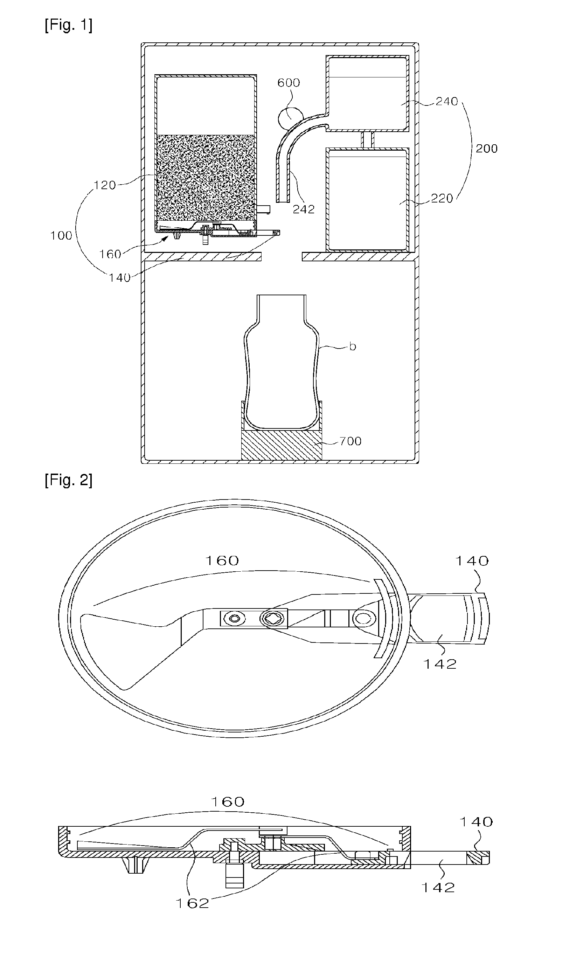

Fig. 1 is a view showing the internal construction of an automatic baby formula mixing apparatus, according to a preferred embodiment of the present invention. Fig. 2 shows views illustrating the formula-dispensing unit shown in Fig. 1 in detail.

First, the formula-dispensing unit 100 will be explained.

The formula-dispensing unit 100 weighs powdered formula of an amount set by a user and supplies it into a feeding bottle b. The formula-dispensing unit 100 of the present invention includes a formula container 120 which contains powdered formula to be weighed and supplied, a transfer tip 140 which is provided under a lower end of the formula container 120 and linearly reciprocates between the interior and exterior of the formula container 120, and a transferring means 160 which operates the transfer tip 140 and reciprocates it.

In an embodiment of the present invention, a formula-dispensing unit disclosed in Korean Patent Application No. 10-2001-0024734 is used as the formula-dispensing unit 100 in order to precisely weigh the amount of powdered formula before supplying it. To consistently supply the correct amount of powdered formula contained in the transfer tip 140, the formula-dispensing unit 100 is configured such that a portion of powdered formula that protrudes upwards from the transfer tip 140 is removed from the transfer tip 140 so that powdered formula that is contained only in a receiving hole 142 of the transfer tip 140 can be supplied from the formula-dispensing unit 100.

As shown in Fig. 2, the receiving hole 142 that is open on the upper and lower ends thereof is formed through an end of the transfer tip 140. Therefore, when the transfer tip 140 is retracted into the formula container 120, powdered formula is contained in the receiving hole 142. When the transfer tip 140 is extracted outwards from the formula container 120, the powdered formula falls because of gravity and enters the feeding bottle b that has been disposed below.

Here, because the amount of powdered formula contained in the receiving hole 142 is constant every time, the transfer tip 140 must be able to reciprocate an appropriate number of times to match the amount of powdered formula supplied into the feeding bottle with that preset by the user.

As shown in Fig. 2, the transferring means 160 according to the embodiment of the present invention is configured such that two links 162 connect the transfer tip 140 to a rotating shaft coupled to a motor (not shown) so that the transfer tip 140 can be reciprocated by rotation of the output shaft.

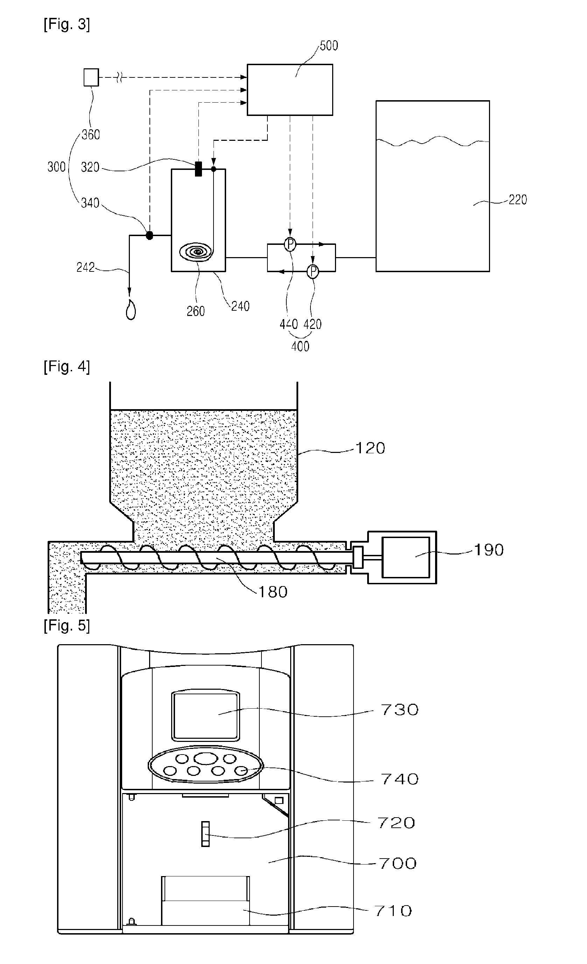

The water-supplying unit 200 will now be explained with reference to Fig. 3. Fig. 3 is a schematic view illustrating the concept of controlling the amount of water and the temperature of the water according to the present invention. For reference, in Fig. 3, dashed arrows denote the flow of control signals, and solid arrows denote the flow of water.

The water-supplying unit 200 supplies water of a temperature that is set by the user into the feeding bottle b. For this, in the embodiment of the present invention, the water-supplying unit 200 includes a water reservoir 220 and a hot water tank 240 which has a heating means 260 for heating water.

The water reservoir 220 is disposed at a predetermined position around the formula-dispensing unit 100. The pump unit 400 which will be explained later supplies water that has been in the water reservoir 220 into the hot water tank 240. The water is heated in the hot water tank 240. In this embodiment, the heating means 260 heats water in the hot water tank 240. As shown in Fig. 3, a heat wire is typically used as the heating means 260. The heat wire may be installed in the hot water tank 240 in a coil shape or, alternatively, it may wrap around the outer surface of the hot water tank 240.

A temperature sensor 320 which will be explained later and the control unit 500 are used to control the heating means 260 so that the temperature of the water can be maintained at a temperature that is preset by the user or the water can be immediately heated to a temperature input by the user, as necessary.

A lower end of the hot water tank 240 forms a tube 242. The tube 242 is disposed at a position spaced apart from the formula container 120 by a slight distance. A distal end of the tube 242 must be located at a position at which it does not interfere with the transfer tip 140 that is in the extracted state but can supply water into the feeding bottle b that is disposed below.

This embodiment of the present invention is configured such that the distal end of the tube 242 is disposed just above the transfer tip 140 that is in the completely-extracted state so that water can directly enter the feeding bottle b after the transfer tip 140 has been retracted.

As such, the water-supplying unit 200 separately includes the water reservoir 220 and the hot water tank 240, and the heating means 260 always maintains the hot water tank 240 in the heated state so that hot water can be immediately supplied without requiring waiting. Further, rather than heating the entirety of the water reservoir 220, the present invention is configured such that only a necessary amount of water is heated, thus saving energy.

Preferably, an ultraviolet lamp 600 is installed at a predetermined position on the end of the hot water tank 240 to sterilize the water-supplying unit 200 and the formula-dispensing unit 100. Furthermore, the ultraviolet lamp 600 applies ultraviolet rays onto the feeding bottle b through an opening that is formed therebelow to supply water and powdered formula into the feeding bottle b, thus also sterilizing the feeding bottle b. Here, the apparatus may be configured such that a room is defined around the water-supplying unit 200 and the formula-dispensing unit 100, a storage space is defined in the room to store a feeding bottle b that is not in use or baby products therein, and ultraviolet rays emitted from the ultraviolet lamp 600 can reach the room, also sterilizing the articles in the storage space.

In this embodiment, the ultraviolet lamp 600 is disposed around an upper portion of the water-supplying unit 200 to achieve the purpose of sterilizing all of the formula-dispensing unit 100, the water-supplying unit 200, and the feeding bottle b that is disposed below. However, the permeability of the ultraviolet lamp 600 is low, so only portions which light emitted from the ultraviolet lamp 600 directly comes into contact can be sterilized. Therefore, to further enhance the sterilizing power, it is preferable that the water-supplying unit 200 and the formula-dispensing unit 100 be made of an antibacterial material.

For reference, in the present invention, a synthetic resin that contains an antibacterial monomer including a saturated or unsaturated hydrocarbon having a polymerizable functional group, the antibacterial monomer being proposed in Korean Patent Registration No. 536551, is used as the antibacterial material. The antibacterial monomer is to be sold as brand name 'Biocleanact' by Micro Science Tech Co., Ltd., which is the applicant for the patent.

If forming the formula container 120 or the water reservoir 220 includes mixing the Biocleanact with PP and injection-molding the mixture, there can be a sterilizing effect even at a position spaced apart from the surface of the formula container 120 or the water reservoir 220 by a predetermined distance (about 1 cm), so that it can sterilize powdered formula or water contained therein, thus making the apparatus more sanitary.

Next, the sensor unit 300 will be explained.

The sensor unit 300 may include the temperature sensor 320 and a flow sensor 340. Preferably, the sensor unit 300 may further include a position sensor 360.

The temperature sensor 320 is provided on the hot water tank 240 to sense the temperature of heated water. A temperature value measured by the temperature sensor 320 is sent to the control unit 500, which will be described in detail later. Depending on the measured temperature value, the control unit 500 controls the operation of the heating means 260. In other words, if the temperature of the water in the hot water tank 240 decreases below a preset temperature, the control unit 500 operates the heating means 260, thus heating the water. When the temperature of the water reaches the preset temperature, the control unit 500 stops the operation of the heating means 260, thus maintaining the temperature of the water to be constant.

The flow sensor 340 is a sensor that measures the amount of water discharged from the hot water tank 240, in other words, the amount of water input into the feeding bottle. The flow sensor 340 is installed on the tube 242 of the hot water tank 240 and measures the flow rate of water that passes through the tube 242. A value measured by the flow sensor 340 is also transmitted to the control unit 500 and is used to control the operation of the pump unit 400 which will be described later.

The position sensor 360 is disposed at a predetermined position on the formula-dispensing unit 100 and senses whether the transfer tip 140 is completely retracted into the formula container 120. The reason for this is that water must be supplied into the feeding bottle after the transfer tip 140 has been completely retracted into the formula container 120. An infrared sensor is the most typical type of position sensor 360. It is preferable for the position sensor 360 to be disposed just above the transfer tip 140.

The pump unit 400 will now be explained.

The pump unit 400 is installed between the water reservoir 220 and the hot water tank 240 and functions to pump water from either into the other. The pump unit 400 may be configured such that one pump pumps water both in one direction and in the reverse direction. More preferably, the pump unit 400 includes a supply pump 420 which supplies water from the water reservoir 220 into the hot water tank 240, and a return pump 440 which returns water from the hot water tank 240 into the water reservoir 220.

The supply pump 420 fills the hot water tank 240 with water, and the water is heated to a preset temperature and stored in the hot water tank 240.

Further, even when water is supplied into the feeding bottle through tube 242, the supply pump 420 is operated so that water is continuously supplied from the water reservoir 220 into the hot water tank 240. Because of such operation of the supply pump 420, the hot water tank 240 can be maintained in the state of being filled with water even when water is being discharged from the hot water tank 240.

After the supply of water into the feeding bottle b has been completed, the supply pump 420 stops. Here, some water remains in the tube 242, so the remaining water may continuously drip from the tube 242. To avoid this problem, the return pump 440 is operated so that a predetermined amount of water returns from the hot water tank 240 into the water reservoir 220, thus returning the water that has remained in the tube 242 into the hot water tank 240.

The control unit 500 will now be explained.

The control unit 500 generates signals to control the formula-dispensing unit 100, the water-supplying unit 200, and the pump unit 400 depending on the amount of baby formula, a ratio of powdered formula to water, and the temperature of water that are input by the user.

The control unit 500 divides a required amount of powdered formula by the amount of powdered formula that can be supplied by the transfer tip 140 at one time, thus determining the number of times the transfer tip 140 reciprocates between the extraction and the retraction. In this embodiment of the present invention, after the number of times of reciprocation of the transfer tip 140 has been determined, the control unit 500 rotates a motor (not shown) that is provided under the formula-dispensing unit 100. If the output shaft of the motor makes one revolution, the transfer tip 140 reciprocates one time. Given this, the control unit 500 rotates the output shaft of the motor the number of revolutions corresponding to the calculated number of reciprocations of the transfer tip 140. During this operation, the control unit 500 receives signals from the position sensor 360 to determine the position of the transfer tip 140 and controls the motor such that after the transfer tip 140 has correctly reciprocated the determined number of times, it is completely retracted into the formula container 120.

Furthermore, during the above operation, the control unit 500 uses the temperature sensor 320 and controls the heating means 260 so that the temperature of the water in the hot water tank 240 is maintained at a preset temperature.

After the transfer tip 140 have been completely retracted into the formula container 120, the control unit 500 sends a signal to the pump unit 400 to operate the supply pump 420. Then, the supply pump 420 supplies water from the water reservoir 220 into the hot water tank 240 that has been filled with water, so that hot water that has been in the hot water tank 240 is supplied into the feeding bottle b by the tube 242. Here, the flow sensor 340 senses the flow rate of water passing through the tube 242 and sends a signal thereof to the control unit 500. The control unit 500 stops the supply pump 420 when the amount of water supplied into the feeding bottle b precisely reaches the preset level.

Subsequently, the control unit 500 operates the return pump 440 so that a predetermined amount of water returns from the hot water tank 240 into the water reservoir 220, thus returning water that has remained in the tube into the hot water tank 240.

Hereinafter, another embodiment of the present invention will be described with reference to Fig. 4. Fig. 4 is a schematic view showing the construction of a formula-dispensing unit of an automatic baby formula mixing apparatus, according to this embodiment of the present invention.

This embodiment of the present invention includes a formula-dispensing unit 100, a water-supplying unit 200, a sensor unit 300, a pump unit 400 and a control unit 500. The water-supplying unit 200, the sensor unit 300, and the pump unit 400 according to this embodiment are the same as those of the above embodiment, therefore further explanation will be omitted, and only the formula-dispensing unit 100 and the control unit 500 having different structures from those of the above embodiment will be explained.

As shown in Fig. 4, the formula-dispensing unit 100 includes a formula container 120, a screw 180 and a drive device 190. The formula container 120 is a container that stores powdered formula and is preferably configured such that the width thereof is reduced from the top to the bottom.

The screw 180 is a rotating shaft provided with a spiral blade. The screw 180 is disposed below the formula container 120 and functions to transfer powdered formula, which falls downwards from the formula container 120, in one direction. The drive device 190 is a motor or the like, and rotates the screw 180. The speed and the number of revolutions of the drive device 190 are controlled by the control unit 500.

In this embodiment, depending on the amount of powered formula that is set by the user, the control unit 500 controls the number of revolutions of the screw 180 so that a desired amount of powdered formula is dispensed.

Hereinafter, the operation of the present invention will be explained with reference to Fig. 5. Fig. 5 is a front view showing the external appearance of the apparatus of the present invention.

As shown in Fig. 5, in the present invention, set buttons 740 which are used to set the amount of powdered formula, a ratio of powdered formula to water, the temperature of the water, etc., and a liquid crystal display 730 which displays set information are provided on an upper portion of a casing of the apparatus.

Further, a lower portion of the casing is depressed to have a concave shape, defining a receiving chamber 700 in which the feeding bottle b can be received. A switch 720 is installed in the receiving chamber 700. The switch 720 is used to determine whether a feeding bottle b is placed in the receiving chamber 700. Only when the feeding bottle b is placed in the receiving chamber 700 and the switch 720 is pushed can powdered formula and water be supplied into the feeding bottle b. The reason for this is to prevent waste of powdered formula or water and avoid a problem of water and powdered formula being stagnant in the lower portion of the casing, which may cause the propagation of germs.

In addition, a bottle support 710 is removably installed on the bottom of the receiving chamber 700. The bottle support 710 prevents the feeding bottle b received in the receiving chamber 700 from undesirably moving and thus makes the feeding bottle b continuously push the switch 720 so that the switch 720 can be maintained in the turned-on state. The reason for use of the bottom support 710 is because a feeding bottle b, when is empty and light, may be pushed away from the switch 720 by the elasticity of a spring provided in the switch 720 and thus may not be able to correctly turn on the switch 720.

Here, the bottle support 710 has a removable structure, allowing different kinds of bottle supports 710 having different heights and different sizes of depressions formed therein to be used depending on the kind of the feeding bottle b.

The user opens an upper cover of the casing and separates the formula container 120 from the casing. Subsequently, the user puts powdered formula into the formula container 120, reliably closes a stopper of the formula container 120, and then places it back in the casing at the correct position. Further, the user separates the water reservoir 220 from the casing, supplies water into the water reservoir 220, and then places it in the casing. The user thereafter closes the cover of the casing. A bottle support 710 suitable for a desired feeding bottle b is placed on the bottom of the receiving chamber 700. Thereafter, the user sets the apparatus such that, for example, 16 g of powdered formula and 150 ml of water at 40 °C are mixed with each other.

Subsequently, the user mounts the feeding bottle b on the bottle support 710. Then, the feeding bottle b pushes the switch 720 to turn on power, the user pushes the corresponding set button 740, and the control unit calculates the number of times the transfer tip 140 has to reciprocate to supply 16 g of powdered formula. In an embodiment of the present invention, the transfer tip 140 is configured such that the 1 g of powdered formula can be received in the receiving hole 142, so the transfer tip 140 reciprocates sixteen times.

After the number of reciprocations of the transfer tip 140 has been calculated, the control unit 500 instructs the motor provided under the formula-dispensing unit 100 to make sixteen revolutions. If the speed of rotation of the motor is excessively fast, the transfer tip 140 may be retracted into the formula container 120 before all powdered formula that has been in the transfer tip 140 completely falls out of the transfer tip 140. In this case, there is a probability of an incorrect amount of powdered formula being supplied into the feeding bottle b. To prevent the above problem, control of the speed of rotation of the motor or installation of a reducer on the output shaft of the motor is required.

After the transfer tip 140 has reciprocated sixteen times, when the position sensor 360 determines that the transfer tip 140 has been completely retracted into the formula container 120, the control unit 500 stops the operation of the motor and operates the supply pump 420, thus supplying 150 ml of water at 40 °C into the feeding bottle b.

After the supply of powdered formula and water into the feeding bottle b has been completed, the return pump 440 is operated, returning water that is in the tube 242.

Finally, the user pulls the feeding bottle b out of the receiving chamber 700, covers the feeding bottle b with a cover, and shakes it to dissolve the powdered formula in the water, before feeding a baby.

### Industrial Applicability

As described above, the present invention provides a baby formula mixing apparatus which supplies powdered formula of a preset amount and water of a preset amount and temperature and automatically mixes the powdered formula and the water with each other.

## Claims

1. An automatic baby formula mixing apparatus for supplying powdered formula and water into a feeding bottle in response to setting of an amount of powdered formula and an amount and temperature of water by a user, the automatic baby formula mixing apparatus comprising:
a formula-dispensing unit (100) installed in a formula container (120) containing powdered formula, the formula-dispensing unit (100) comprising: a transfer tip (140) formed with a receiving hole (142) that is open on upper and lower ends thereof, the receiving hole (142) receiving a predetermined amount of powdered formula therein; and transferring means (160) for reciprocating the transfer tip (140) between inside and outside of the formula container (120), whereby when the transfer tip (140) is extracted out of the formula container (120), the powdered formula that has been in the receiving hole (142) falls into the feeding bottle (b) disposed therebelow;
a water-supplying unit (200) comprising: a water reservoir (220) disposed at a predetermined position around the formula-dispensing unit (100), the water reservoir (220) storing water therein; and a hot water tank (240) communicating with the water reservoir (220) and receiving water supplied from the water reservoir (220), the hot water tank (240) being provided with heating means (260) for heating the water in the hot water tank (240), wherein an end of the hot water tank (240) is disposed above the feeding bottle (b) so that water of a preset amount and temperature is supplied from the hot water tank (240) into the feeding bottle (b);
a sensor unit (300) comprising a temperature sensor (320) measuring the temperature of the water stored in the hot water tank (240), and a flow sensor (340) provided on an outlet of the hot water tank (240), the flow sensor (340) measuring the amount of water discharged from the hot water tank (240);
a pump unit (400) disposed between the water reservoir (220) and the hot water tank (240), the pump unit (400) pumping water from either the water reservoir (220) or the hot water tank (240) into the other; and
a control unit (500): controlling a number of times of extraction of the transfer tip (140) depending on a preset amount of powdered formula and retracting the transfer tip (140) into the formula container (120); controlling the heating means (260) depending on a preset temperature of the water; operating the pump unit (400) depending on a preset amount of water so that the preset amount of water is pumped from the water reservoir (220) into the hot water tank (240), thus supplying the preset amount of water into the feeding bottle (b); and operating the pump unit (400) in a reverse direction after the supply of water into the feeding bottle (b) has been completed, thus reversely pumping a predetermined amount of water from the hot water tank (240) into the water reservoir (220).

2. The automatic baby formula mixing apparatus according to claim 1, wherein the sensor unit (300) further comprises
a position sensor (360) disposed above the transfer tip (140), the position sensor (360) sensing a position of the transfer tip (140).

3. The automatic baby formula mixing apparatus according to claim 1, wherein the heating means (260) comprises a heat wire installed in the hot water tank (240) in a coil shape.

4. The automatic baby formula mixing apparatus according to claim 1, wherein the pump unit (400) comprises: a supply pump (420) pumping water from the water reservoir (220) into the hot water tank (240); and a return pump (440) pumping water from the hot water tank (240) into the water reservoir (220).

5. The automatic baby formula mixing apparatus according to any one of claims 1 through 4, further comprising
an ultraviolet lamp (600) emitting ultraviolet rays to sterilize the formula-dispensing unit (100), the water-supplying unit (200), and the feeding bottle (b) disposed therebelow.

6. An automatic baby formula mixing apparatus for supplying powdered formula and water into a feeding bottle in response to setting of an amount of powdered formula and an amount and temperature of water by a user, the automatic baby formula mixing apparatus comprising:
a formula-dispensing unit (100) comprising: a formula container (120) containing powdered formula therein; a screw (180) provided under the formula container (120), the screw (180) transferring powdered formula in one direction and discharging the powdered formula into the feeding bottle (b) disposed therebelow; and a drive device (190) driving the screw (180);
a water-supplying unit (200) comprising: a water reservoir (220) disposed at a predetermined position around the formula-dispensing unit (100), the water reservoir (220) storing water therein; and a hot water tank (240) communicating with the water reservoir (220) and receiving water supplied from the water reservoir (220), the hot water tank (240) being provided with heating means (260) for heating the water in the hot water tank (240), wherein an end of the hot water tank (240) is disposed above the feeding bottle (b) so that water of a preset amount and temperature is supplied from the hot water tank (240) into the feeding bottle (b);
a sensor unit (300) comprising a temperature sensor (320) measuring the temperature of the water stored in the hot water tank (240), and a flow sensor (340) provided on an outlet of the hot water tank (240), the flow sensor (340) measuring the amount of water discharged from the hot water tank (240);
a pump unit (400) disposed between the water reservoir (220) and the hot water tank (240), the pump unit (400) pumping water from either the water reservoir (220) or the hot water tank (240) into the other; and
a control unit (500): controlling a number of revolutions of the screw (180) depending on a preset amount of powdered formula; controlling the heating means (260) depending on a preset temperature of the water; operating the pump unit (400) depending on the preset amount of water so that the preset amount of water is pumped from the water reservoir (220) into the hot water tank (240), thus supplying the preset amount of water into the feeding bottle (b); and operating the pump unit (400) in a reverse direction after the supply of water into the feeding bottle (b) has been completed, thus reversely pumping a predetermined amount of water from the hot water tank (240) into the water reservoir (220).
